Europäisches Patentamt

European Patent Office

Office européen des brevets

(19)

(11) Publication number: **0 000 618**
**B1**

(12) **EUROPEAN PATENT SPECIFICATION**

(45) Date of publication of patent specification: **27.10.82**

(21) Application number: **78300080.5**

(22) Date of filing: **26.06.78**

(51) Int. Cl.³: **B 29 C 24/00,**
**B 29 C 27/10, B 29 H 7/00,**
**F 16 J 15/32**

(54) **Method and apparatus for making O-rings.**

(30) Priority: **24.06.77 US 809888**

(43) Date of publication of application:
**07.02.79 Bulletin 79/3**

(45) Publication of the grant of the patent:
**27.10.82 Bulletin 82/43**

(84) Designated Contracting States:
**BE DE FR GB NL SE**

(56) References cited:
**DE - A - 2 056 460**
**FR - A - 1 095 909**
**FR - A - 1 552 261**
**FR - A - 2 086 944**
**GB - A - 254 570**
**GB - A - 731 605**
**US - A - 1 502 027**
**US - A - 1 622 546**
**US - A - 2 432 870**

(73) Proprietor: **Pavano, Robert Joseph**
**1890 Mountain Top Road**
**Bridgewater New Jersey 08807 (US)**

(72) Inventor: **Pavano, Robert Joseph**
**1890 Mountain Top Road**
**Bridgewater New Jersey 08807 (US)**

(74) Representative: **Rowe, Eric Nielsen et al,**
**Edward Evans & Co. Chancery House 53-64**
**Chancery Lane**
**London WC2A 1SD (GB)**

Courier Press, Leamington Spa, England.

# Method and apparatus for making O-rings

## Technical field of the invention

The invention relates to a method and kit apparatus for custom manufacturing O-rings from stock O-ring cord materials.

## Background art

There are several apparatuses available for the manufacture of O-rings. For example, there is an "O-Ring Splicing Kit 112" available from the Loctite Corporation of Newington, Connecticut, United States of America. That kit is specifically adapted to form O-rings from synthetic rubber material such as Buna-N rubber cord. A cord is first placed in a "Loctite O-ring splicing fixture" ("Loctite is a registered trade mark in the United States of America) and then cut to the proper length. The splicing fixture is disclosed in U.S. Patent No. 3,341,870 and U.S. Design Patent No. 206,551. A thin film of "Loctite quick-set adhesive 404" is then applied to one end of the rubber cord and then the two ends are joined in a special groove in the splicing fixture where they are allowed to set under a small amount of finger pressure. The O-rings formed in that manner are satisfactory for some applications, especially where heat is not a problem. It is believed that the Buna-N rubber is satisfactory for temperatures up to approximately 120°C. For higher temperatures industry frequently uses O-rings of synthetic rubber material which is manufactured and sold by the DuPont Corporation of Wilmington, Delaware, United States of America under the registered trade mark Viton. This material is believed to be acceptable for temperatures up to approximately 230°C. However, it is difficult to custom form this material in view of the fact that it must be vulcanized. One of the primary purposes of the present invention is to provide a portable device that will allow users to form custom made O-rings from high temperature resistant synthetic rubber and similar material such as Viton.

A "Method of Fabricating O-Rings" is disclosed in U.S. Patent No. 3,026,569 to Keller. The method disclosed therein includes the steps of severing a piece of extruded uncured elastomer to a length slightly larger than the circumference of the ultimate O-ring, overlapping the materials and then causing the O-ring to cure in a special mould. The Keller method also specifically discloses the use of a heating mechanism in Figure 13 thereof which is employed to assist in the vulcanization of the materials.

Another U.S. patent, Patent No. 3,107,393 to the same inventor, discloses a more conventional prior art apparatus and method for fabricating O-rings.

The Sivon Manufacturing Company, Inc. of Perry, Ohio, United States of America manufactures a customized vulcanizer which can be used to produce O-rings with different characteristics. The device is advertised and sold as a SMACO Model 50 Vulcanizer and can be operated either manually or by a foot pedal. The device apparently can perform the tasks of splicing and embossing as well as vulcanizing. It is noted, however, that the Sivon Vulcanizer is considerably more complicated and bulky than the present invention which is directed more toward emergency situations.

There are many different methods and apparatus for fusing plastics materials. See for example, Kenyon, U.S. Patent No. 2,765,837, Butler U.S. Patent No. 2,521,282; and Grotten et al U.S. Patent No. 2,514,197 which disclose prior art methods for fusing such materials under conditions of elevated temperature and pressure. Similar methods are known in the automobile tyre manufacturing art. See for example, Ludington, U.S. Patent No. 754,078 and Loomis, U.S. Patent No. 2,688,996.

The moulding of "gasketing material" into a helical shape is disclosed in U.S. Patent No. 3,406,430 to Furstenburg et al. The use of insertable heating elements is known in some arts. For example, Howard, U.S. Patent No. 3,799,727 discloses a heating mechanism in which the heating elements are adapted to slide in and out of the heating area. The use of an electrical control mechanism for heating elements is also known to those of skill in the art and disclosed in U.S. Patent No. 3,799,727.

Devices for making diagonal cuts through materials have been known for many years. Mitre boxes have been used extensively for the purpose of making diagonal cuts through wood and similar materials. U.S. Patent No. 3,811,356 to Wyler discloses a "Mitre Box of Variable Width". It is similar in a very limited respect to the cord cutting fixture of the present invention in that a distance between two guides can be adjusted to accommodate materials of different widths. Adjustment in the Wyler device is accomplished in finite steps by placing or removing spacers between the guides.

There are several devices available on the market that are suitable for the cutting of stock O-ring cord material. For example, the Sivon Manufacturing Co., Inc. of Perry, Ohio, United States of America manufactures three straight blade cutters for use on cord material of Buna-N, Neoprene, Silicone rubber and Viton. The three cutters include the "SMACO" Cantilever Cutter, the "SMACO" Pivot Cutter and the "SMACO" Automatic Guillotine Cutter. The foregoing devices are believed to be more complicated and bulky than the cord cutting fixture of the present invention. In addition, guillotine type cutters are dangerous and inadequate for the purpose of making two diagonal mating cuts simultaneously. It would probably take at least two people to safely make diagonal cuts—

one to hold the ends of the cord material and one to operate the machine.

Also, in Draffone, U.S. Patent No. 4,050,975, there is disclosed a device in which the opposite ends of a loop of stock O-ring cord material can be arranged in guides of varying curvature, guide means being provided for a cutting blade so that the two ends can be cut along a radial plane common to both curved ends of the loop.

Finally, in U.K. Patent Specification No. 731,605 there is disclosed apparatus for making O-rings from stock O-ring cord material comprising a cord cutting fixture for holding a loop of said cord material while it is cut into a predetermined length having two free ends, a bonding liquid for application to at least one of said two free ends and a heating mold for holding said two free ends in mating engagement and heating the free ends so as to cause the free ends to bond to each other.

Disclosure of the invention

The invention, as claimed, is intended to provide an apparatus for making O-rings from stock O-ring cord material which is simpler less costly and more simply operated than apparatus hitherto used for this purpose and which is capable of avoiding disadvantages of known apparatus. It is a related objective of the invention to provide a method of making O-rings from stock O-ring cord material which is simpler, less costly and more simply and effectively performed than known methods hitherto employed for this purpose.

Accordingly, apparatus according to the invention comprises a kit in which the cord cutting fixture includes continuously adjustable holding means for clamping and locking said two free ends in side-by-side relationship, and guide means for guiding a cutting blade such that the free ends are obliquely cut with exactly complementary inclination and mate with each other and such that the angle of inclination of the cutting blade may be varied so that the angle of inclination of the cut free ends to the axis of said cord material is greater for larger diameter cord material and less for smaller diameter cord material, and the heating mould comprises two blocks arranged to meet at an interface and having at least one cord receiving aperture extending across the interface and including a channel which is formed in one of the blocks and forms a portion of the said aperture, the channel having a cross-section in the shape of a major portion of the cross-section of the aperture.

Measurements are first taken to determine the length of cord material necessary to form a required O-ring. A length is marked off on the cord material with an appropriate medium such as white ink. The cord material is then severed in such a fashion as to leave about 1 cm of excess on the far side of each measuring mark. The cord material is then formed into a loop and placed into the cord cutting fixture so that the two measuring marks line up across from one another. The cutting fixture preferably includes a pair of jaws, each of which has a blade guide slot therein. When the cut is made a blade passes through both ends of the cord material simultaneously. Therefore, the oblique cut made in one end is the supplement of the oblique cut made in the other. The cutting fixture is such that the cut made in smaller diameter cord material is made at a greater angle from the perpendicular than the cut made through O-ring material of larger diameter. The bonding liquid is subsequently applied to at least one of the free ends of the O-ring cord material and allowed to dry. As the bonding liquid evaporates, each of the two ends to which bonding liquid has been applied becomes tacky. Once this has occurred, the two ends are placed one at a time into the heating mould such that the faces of the obliquely cut free ends abut each other. The heating mould preferably includes a plurality of apertures in the blocks for receiving O-ring cord material of different cross-diameters. The heating mould preferably comprises upper and lower blocks adapted to mate at the interface. The apertures are formed by cylindrical holes bored asymmetrically through the interface such that the lower block is formed with a channel having a part-circular cross-section in the shape of a major segment of a circle having an arcuate perimeter portion which subtends more than 180° at its centre. Accordingly, the upper block is formed with a channel having a part-circular cross-section in the shape of a minor segment having an arcuate perimeter portion which subtends less than 180° at its centre. In almost all cases, the arcuate perimeter portion of the segment-shaped cross-section of the channel in the lower block subtends approximately 300° at the centre of this arcuate perimeter portion. The cross-section of the channel is therefore sufficiently great to hold one free end of the cord stock material in place while the other free end is fed from the other end of the channel into axial engagement with the first free end before the upper block is mated with the lower block, but leave a large enough gap to allow the O-ring to be peeled out after vulcanizing. For smaller diameter cord materials, the upper block may have no channels. In any case, it is possible to insert the two ends of the O-ring cord material into the lower block one at a time from opposite sides and to hold them there without any additional assistance. In other words, by its construction the lower block prevents the first end from too readily rotating about its axis or moving axially while the second end is being fed into axial abutment and then prevents the two ends of the cord from too readily becoming displaced. The upper block may then be placed in position and secured by a pair of locking screws. The ends of the cord material are subsequently heated to approximately 200°C for 8 to 15 minutes. After the heating step is completed, the heating mould may be immersed in ambient water. After the mould has cooled the upper and lower blocks may be separated and the O-ring peeled out of the channel in the lower block.

A kit embodying the invention and its method of use are hereinafter described, by way of example, with reference to the accompanying drawings.

Brief description of the drawings

Figure 1 is a perspective view illustrating the basic elements of a kit including apparatus according to a preferred embodiment of the invention;

Figures 2A to 2H are perspective views showing use of parts of the kits during successive steps performed in making an O-ring;

Figures 3A to 3D are plan, side elevational, front elevational and rear elevational views of an O-ring cord cutting fixture forming part of the kit shown in Figure 1;

Figure 3E is a cross-sectional view of the cutting fixture illustrated in Figure 3A, as seen from perspective 3E—3E.

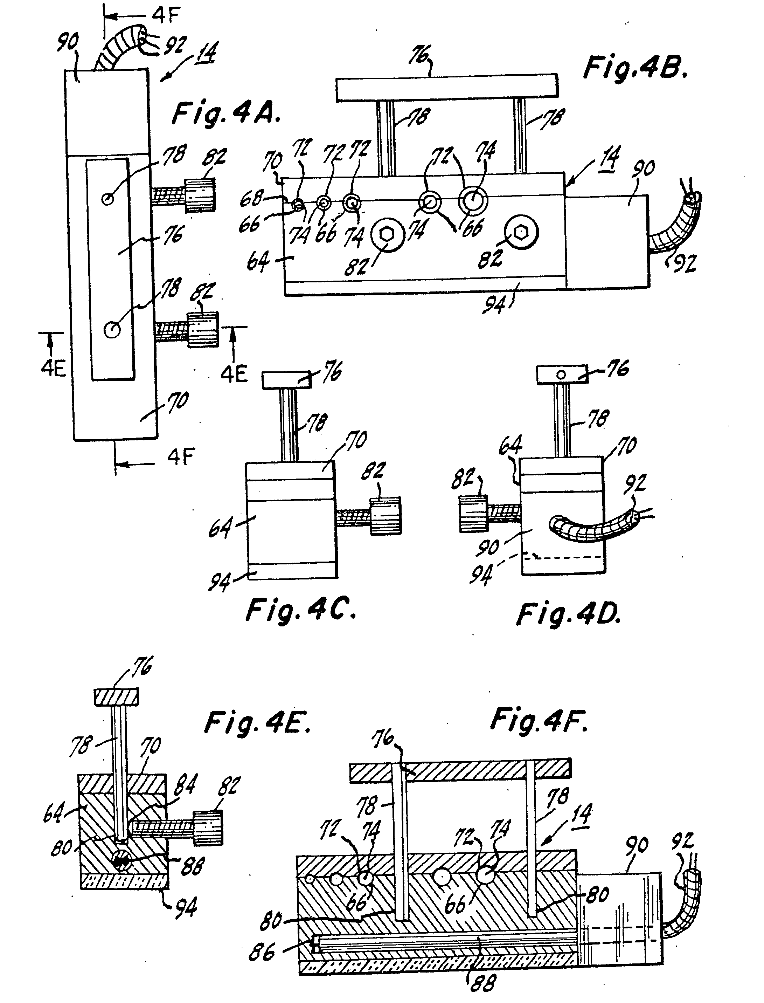

Figures 4A to 4D are plan, front elevational, side elevational and rear elevational views of the heating mould forming part of the kit shown in Figure 1;

Figure 4E is a cross-sectional view of the heating mould illustrated in Figure 4A, as seen from perspective 4E—4E; and

Figure 4F is a cross-sectional view of the heating mould illustrated in Figure 4A, as seen from perspective 4F—4F.

Best mode for carrying out the invention

During the course of this description, like numbers will be used to indicate like elements in the different views illustrating the invention.

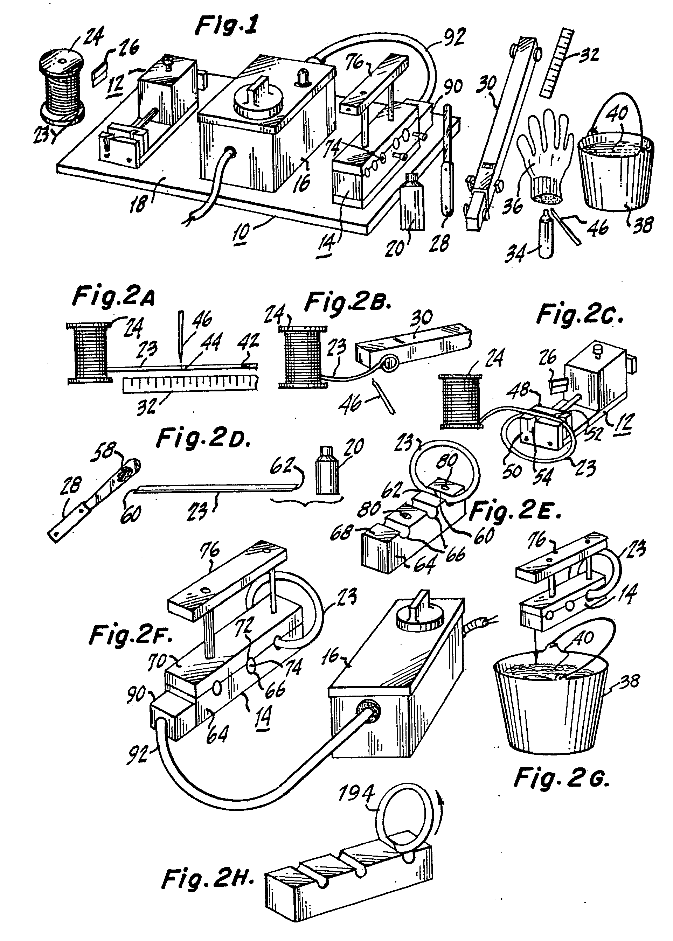

Figure 1 illustrates the basic elements of the O-ring kit 10. The basic kit elements include a cord cutting fixture 12, a heating mould 14 provided with a heating control unit 16. Elements 12, 14 and 16 are mounted on a baseboard 18 for convenience. The basic kit 10 also includes a pressurized container 20 of bonding liquid 58. There are a variety of other elements which are useful in practising the method of the invention, but which may or may not be part of the kit package at the option of the kit manufacturer. Those optional elements include a supply of O-ring cord material 23 mounted on a spool 24, a razor blade 26 for cutting the cord material 23, a spatula 28, an O-ring gauge 30 and/or an O-ring measuring ruler 32, a bottle of white ink 34 and a marking pen 46 for marking the cord material 23, a pair of heat protective gloves 36 and a small bucket or pail 38 for holding the water 40 used in the quenching of heating mould 14.

The steps involved in making an O-ring 194 from the elements illustrated in Figure 1 are set forth in Figures 2A to 2H. It is frequently desirable to custom make O-rings under emergency circumstances. Typically, there might be an O-ring failure and insufficient time to purchase a new one. Therefore, in order to carry out the first step of a method according to the present invention it is necessary to determine the size of the O-ring 194 to be manufactured or replaced. If an O-ring is to be replaced its cross-sectional diameter can be measured either with the gauge 30 or with an appropriate pair of callipers. The ultimate circumferential length of the O-ring 194 can likewise be determined by the use of an appropriate gauge 30 or it may be determined mathematically by measuring the diameter of the O-ring seat and then multiplying by 3.14 to determine the length of the circumference.

Figure 2A illustrates a conventional method for measuring and marking the O-ring cord material 23. Figure 2B illustrates an acceptable alternative method for measuring and marking the O-ring cord material. According to Figure 2A, the circumferential length of the O-ring 194 has been predetermined mathematically and two white ink marks 42 and 44 are placed on the cord material 23 by marking pen 46. It is preferable to then cut the cord and leave an additional 1 cm of excess material at each end of the cord material for insertion into the cutting fixture 12. Alternatively, as shown in Figure 2B, if the required O-ring 194 is of a conventional size, the cord material 23 may be measured and marked directly on the O-ring gauge 30. O-ring gauges are available on the market for the purpose described above. One is commercially known as the "National O-Ring Gauge" manufactured by the Federal-Mogul Corporation, Detroit, Michigan, United States of America. Again, if the cord material 23 is severed an additional 1 cm of excess material should be left on the outside of the white ink marks 42 and 44. As a third alternative, it may be possible to measure the required length of O-ring cord material 23 directly around a shaft. If so, the same procedures are followed as are set forth above with regard to the steps in Figure 2A or 2B.

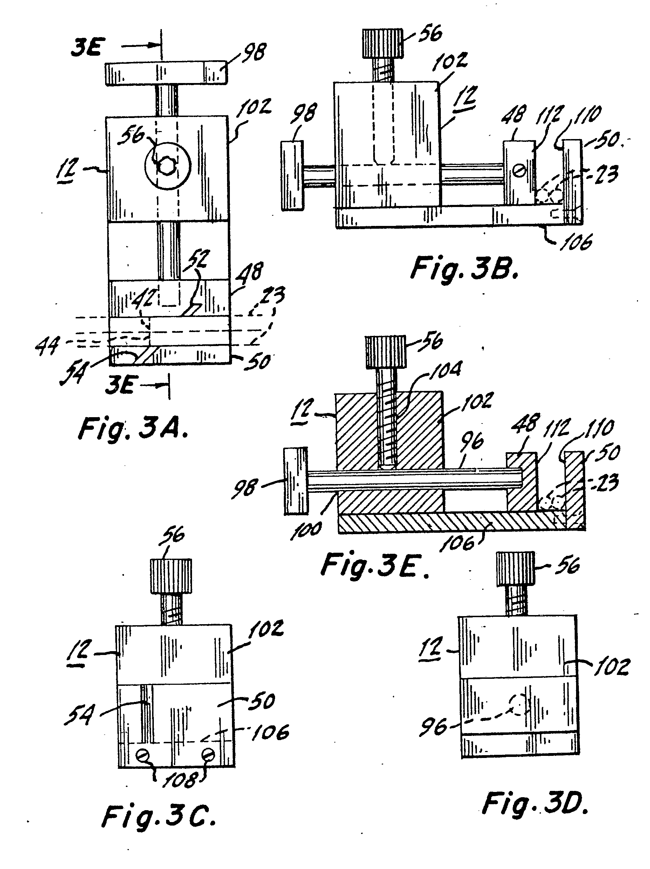

The marked length of cord material 23 is then inserted into the cord cutting fixture 12 as shown in Figure 2C. The cord material 23 may or may not be severed from the spool 24 at the convenience of the operator. The cord cutting fixture includes a fixed jaw 50, attached to a base 106, and a movable jaw 48 which can slide along the base 106. When inserted into the cord cutting fixture 12 the cord material 23 is formed in a loop and laid between the jaws 48 and 50 of the fixture in such a fashion as to assume a side-by-side relationship. The white ink marks 42 and 44 are lined up directly across from one another so that the loop formed by the cord material 23 is approximately the size of the required O-ring 194. The relationship of the two ends of the cord material 23 in position in fixture 12 is illustrated in Figures 3A, 3B and 3E. The cord cutting fixture 12 includes guide means for guiding the razor blade 26 through

the O-ring cord material 23. The guide means comprise a notch 52 in movable jaw 48 and a slot 54 in jaw 50. Movable jaw 48 can be adjusted to push the two ends of the cord material 23 together against the fixed jaw 50. The movable jaw 48 may then be locked in this position by means of locking screw 56. Finger pressure may be employed to flatten the two ends of the cord material 23 and keep them parallel to the base 106 of the cutting fixture prior to the cutting step. The cutting step is performed by placing razor blade 26 into slot 54 and notch 52 and then passing the razor blade 26 through the two ends of the cord material 23 simultaneously so as to make one clean cut. One important feature of this preferred embodiment of the invention is the ability of the cord cutting fixture 12 to adjust the angle of the oblique cut to suit the diameter of the specific material being used. On O-rings having small diameter cord material 23, it is preferable to make the oblique cut in such a fashion as to expose a relatively large cut face. This is necessary to provide a larger bonding surface and therefore give added strength to the ultimate product. Conversely, if the O-rings have a relatively large cord material diameter and there is adequate cross-sectional area for the bonding liquid then it is more desirable to make the oblique cut closer to a direction that is perpendicular to the length of the cord material in order to avoid having to match up cord material edges of excessive length. By providing a fixed lateral spacing between the notch 52 and the slot 54 the cord cutting fixture 12 automatically adjusts for cord materials of different diameters so that bigger diameter cord materials are cut at a larger angle to the axis of the cord material and the smaller diameter cord materials are cut at a smaller angle to the axis of the cord material. This automatic compensation applies because the larger diameter cord materials 23 locate the movable jaw 48 further away from fixed jaw 50. Slot 54 and notch 52 are sufficiently wide enough to accommodate the razor blade 26 at a wide variety of angles. Notch 52 acts like a pivot around which the razor blade 26 may rotate. Accordingly, slot 54 may be wider than notch 52.

The lateral off-set between the notch 52 and the slot 54 also ensures that the mean length of the loop of cut cord material 23 is slightly smaller than the circumference of the member on which the O-ring 194 is to be mounted. This minor shortening is not only acceptable, but in many cases advantageous in causing the O-ring 194 to fit snugly on said member.

As shown in Figure 3A to 3E, cord cutting fixture 12 includes a first locking screw 56 which immobilizes the movable jaw 48 when movable jaw 48 is in position with respect to fixed jaw 50. The movable jaw 48 is connected by a first locking pin 96 to a handle 98. Pin 96 passes through a first locking pin aperture 100 in locking block housing 102. A first locking screw 56 is likewise situated in a first screw-threaded aperture which is at right angles to an in communication with first locking pin aperture 100. Accordingly, the movable jaw 48 may be locked in position by screwing first locking screw 56 downwardly against pin 96. Conversely the position of movable jaw 48 may be unlocked by screwing the locking screw 56 upwardly out of the first screw-threaded aperture 104. The fixed jaw 50 is attached to the base 106 by a pair of machine screws 108. In a similar manner the locking block housing 102 may be attached to base 106.

Although apparatus according to the invention can be utilised for producing O-rings 194 of a wide range of sizes, typically from 1.5 cm to 1.5 m diameter, from a wide range of sizes of stock O-ring, cord material typically from 0.15 cm to 1.5 cm diameter, this apparatus is primarily concerned with the emergency preparation, for example, in petro-chemical plants, of O-rings of between 3.5 cm and 6.5 cm diameter from stock O-ring material of 0.25 cm to 0.65 cm diameter. In this case, although schematically shown in Figure 3A, slot 54 and notch 52 are approximately 1.25 cm apart when the movable jaw 48 is pushed into an abutting relationship with fixed jaw 50. Slot 54 is approximately 0.32 cm wide and positioned at an angle of approximately 30° with respect to the plane of the inner face 110 of the fixed jaw 50. Notch 52 is approximately 0.16 cm wide and situated at an angle of approximately 45° with respect to the inner face 112 of the movable jaw 48. As described previously, there has to be sufficient play in the slot 54 and the notch 52 to allow the razor blade 26 to adjust to a variety of cord material sizes without binding on the sides of the jaws 48 and 50. The cord cutting fixture 12 may be secured to base 18 by any of a variety of conventional attaching devices, including screws, bolts, and glues and adhesives.

Once the cord material 23 is cut to size, bonding liquid 58 is applied to the oblique cut free ends 60 and 62 as shown in Figure 2D. The container 20 for the bonding liquid 58 may be a commercially available aerosol container. A suitable bonding liquid 58 is commercially known as PLV-2000 and is manufactured and distributed by Pelmor Laboratories, Inc., Lafayette Street, Newton, Pennsylvania, United States of America. In order to apply the bonding liquid 58 to the free ends 60 and 62 of the cord material, a globule of 1.5 cm diameter is first sprayed onto the blade of the spatula 28 or other similar clean surface. Both ends 60 and 62 are then dipped into the globule of bonding liquid 58 and allowed to dry. As the drying takes place the cord material 23 changes from a glossy appearance to a rather dull sheen. That indicates that the solvent of the bonding liquid 58 has substantially evaporated. At that point the two ends are slightly tacky.

As shown in Figure 2E the two ends 60 and 62 are then mated in the lower block 64 of the heating mould 14. Due to the manner in which the cord material 23 was severed in cutting fixture 12, the two ends 60 and 62 are of supplementary geometry. The lower block 64 includes a plurality of holding channels 66. The holding channels 66 each comprises a portion of a cylindrical hole and have a cross-section in the shape of a major segment of a circle such that the arcuate perimeter portion of this cross-section subtends an angle of more than 180° at the centre of the circle. Therefore, the widest portion of each channel 66 is below the interface 68 between the lower block 64 and the upper block 70. Accordingly, when one of the two tacky ends 60 and 62 is axially inserted into the end of a channel 66, this end tends to stay in place while the other tacky end is inserted into the other end of the channel 66 and the mated ends are held together prior to the heating step. This facilitates proper mating of the tacky ends.

Once the two ends 60 and 62 are in position, the heating mould 14 is ready to be sealed. This is accomplished by placing the upper block 70 in position as illustrated in Figure 2F. The upper block 70 typically includes a plurality of upper complementary channels 72 which cooperate with the holding channels 66 in the lower block 64. Each upper channel 72 has a cross-section in the shape of a minor segment of a circle such that the arcuate perimeter portion of this cross-section subtends an angle of less than 180° at the centre of the circle and therefore, each such channel 72 is widest at the interface 68. For the smaller diameter cord materials there may be no need for an upper channel 72. The apertures 74 formed by channels 66 and 72 are not perfectly round in cross-section. During the manufacture of the heating mould 14, the apertures 74 are formed by asymmetrically drilling cylindrical holes across the interface 68 of the two blocks 64 and 70. The holes are approximately the diameter of popular O-ring materials. The face of the upper block 70 is then ground down approximately 0.025 cm to 0.030 cm. Therefore, the ends 60 and 62 of the cord material 23 are placed under compression when the upper block 70 is placed in position over lower block 64.

The heating mould 14 is provided with a handle 76 which is separated from the upper block 70 by a pair of second locking pins 78. The pins 78, which are releasably locked to the block 70 by set screws (not shown), extend through the upper block 70 and are adapted to be received in two second locking pin apertures 80 in the lower block 64. A pair of second locking screws 82 are located in two second screwthreaded apertures 84 and adapted to impinge against the pins 78 when they are in position in the second locking pin apertures 80. In this manner the upper block 70 may be locked with respect to the lower block 64. Lower block 64 includes an aperture 86 adapted to receive a heater element 88. The heater element 88 is mounted on a block 90 and is electrically attached via cable 92 to the heating control unit 16. Heating mould 14 sits on top of a heat resistant asbestos-like pad 94. Heater element 88 is loosely received in aperture 86 so that it is readily possible to slide the heating mould 14 off pad 94 and out of contact with the heater element 88 after the heating step has been performed.

The heating control 16 and the heater element 88 were both manufactured by Waage Electric, Incorporated of Kenilworth, New Jersey, United States of America. The element was a 120 volt A.C. 100 watt cartridge heater having a 3/8 inch (0.953 cm) diameter and a length of 3 inch (7.62 cm). The control unit was model INF 120. The control unit is apparently equipped with an automatic mechanism for limiting the power to the heater element once the heater element has reached the desired temperature corresponding to a specific control setting.

The heating of the cord material 23 is accomplished after the upper block 70 is locked in position and the lower block 64 is in engagement with the heater element 88 as shown in Figure 2F. The heating takes place at two settings. First, the heating control 16 is set on high for a period of seven minutes. This rapidly brings the temperature up to approximately 200°C. The control is then set to a setting of 5 1/2 for 8 minutes which maintains the heat at 200°C under controlled conditions for a total of 15 minutes. After 15 minutes, the heating control unit 16 is turned off and the mould 14 is slid across pad 94 and away from heater element 88. It is advisable to wear a pair of heat protective gloves 36 as illustrated in Figure 1 when working with the heating mould 14.

The heating mould 14 is then inserted into a small bucket 38 or a similar container of ambient water 40 as shown in Figure 2G. The O-ring 194, and heating mould 14 is then allowed to cool until it reaches approximately room temperature. Cooling takes about 30 seconds when room temperature water is used. After cooling the heating mould 14 may be removed. Rapid quenching of the mould is not a necessary step but it does expedite the manufacture of the O-ring 194.

Heating mould 14 is disassembled by loosening locking screws 82 and removing the upper block 70 from the lower block 64. The O-ring 194 may then be removed from holding channel 66. This is accomplished by simply peeling the O-ring 194 across the holding channel 66 from one side of the lower block 64 towards the other as shown in Figure 2H. The custom made O-ring 194 is now ready for use.

Although the heating mould 14 only requires one second locking pin 78, it preferably includes two second locking pins 78, as shown when there are at least two second locking pins, it is possible to stabilize the mould in two dimensions. It may also be desirable to have one second locking pin 78 of a different diameter than the other second locking pin 78 so that it is impossible to misalign the upper and lower blocks 70 and 64 by reversing the locking pins 78.

The receiving apertures 74 are formed by drilling directly across interface 68. The centre of the axis of each aperture is located below interface 68 in the lower block 64. In smaller cord material sizes the tolerance is ±0.008 cm and for larger cord material sizes the cord tolerance is approximately 0.015 cm. It is desirable to leave an additional 0.005 cm of diameter in each aperture to more readily allow the cord material to be inserted. Therefore, for smaller size cord material the apertures 74 are equal to the nominal diameter of the cord material plus 0.008 cm plus an additional 0.005 cm or a total of 0.013 cm above the nominal size. For large size cord materials, the apertures 74 are equal to the nominal cord material diameter plus 0.015 cm plus an additional 0.005 cm or a total of 0.020 cm greater than the nominal size. After the drilling operation the lower face of the upper block 70 is ground down approximately 0.025 cm to 0.030 cm. Accordingly, the cross-section of the aperture 74 is not a true circle but rather comprises two segments of a circle held together, the total number of degrees subtended by the arcuate perimeter portions of both segments totalling less than 360°. The grinding operation effectively removes some of the volume of the originally cylindrical aperture. In almost all cases, the holding channel 66 in the lower block has a cross-section with an arcuate perimeter portion which subtends an angle of 300°. The channel 72 in the upper block 70 has a cross-section with an arcuate perimeter portion which subtends an angle of, typically, less than 60° after the grinding step. Since the original cylindrical aperture was just slightly larger than the diameter of the O-ring cord material, the final aperture after grinding is slightly smaller than the diameter of the O-ring cord material. Therefore, when upper block 70 is locked in position with respect to lower block 64, there is compression upon the ends 60 and 62 of the cord material 23 during the heat vulcanizing process. Apertures 74 are slightly countersunk at both ends so as to create a flared opening at both ends. The flared openings make it easier to insert the free ends 60 and 62 into the lower block 64 prior to heating.

Upper block 70 and lower block 64 are preferably formed from aluminium in order to ensure rapid heating and cooling. Aluminium also corrodes less and is relatively easy to machine. The second locking pins 78 and second locking screws 82 may be steel.

The heating control unit 16 is a conventional adjustable rheostat or transformer or the like with sufficient capacity to drive the heater element 88. A variety of suitable heating control units 16 and heater elements 88 are believed to be available and suitable for the purposes described herein.

While the invention has been described with reference to a preferred embodiment thereof, it will be apparent to those of ordinary skill in the art that various different changes can be made in the apparatus and method without departing from the scope of the appended claims. For example, it has been disclosed that the invention is particularly adapted for the use in the making of Viton O-rings 194. Clearly other types of standard cord material such as Buna-N, Neoprene, and Silicone rubber could be manufactured into O-rings by essentially the same method and apparatus. The bonding liquid 58 is available in an aerosol pack from Pelmor Laboratories in Newton, Pennsylvania, United States of America. The material could be supplied in a liquid form as well as an aerosol form. The bonding liquid may include other solvents such as methyl ethyl ketone (MEK) for the same purpose. A suitable sharp edge or even a rotating blade could conceivably replace the razor blade 26. Spatula 28, gloves 36 and white ink 34 along with marking pen 46 have been found to be convenient elements, but not absolutely necessary under all circumstances. Other methods and apparatus for measuring the O-ring cord material are possible. The heating mould 14 has been illustrated with five different size receiving apertures 74. Clearly, a greater or smaller number of receiving apertures could be employed depending upon the requirements of the user.

Although reference numerals have been used in the appended claims to improve the intelligibility of these claims, it is expressly stated that these reference numerals should not be construed as limiting the claims to the constructions illustrated in the accompanying drawings.

## Claims

1. Apparatus, in the form of a kit, for making O-rings (194) from stock O-ring cord material (23), comprising:—

a cord cutting fixture (12) for holding a loop of said cord material while it is cut into a predetermined length having two free ends (60 and 62);

a bonding liquid (58) for application to at least one of said two free ends (60 and 62); and

a heating mould (14) for holding said two free ends (60 and 62) in mating engagement and heating the free ends (60 and 62) so as to cause the free ends (60 and 62) to bond to each other;

characterised in that:—

the cord cutting fixture (12) includes continuously adjustable holding means (48, 50 and 106) for clamping and locking said two free ends (60 and 62) in side-by-side relationship, and guide means (52 and 54) for guiding a cutting blade (26) such that the free ends (60 and 62) are obliquely cut with exactly complementary inclination and mate with each other, and such that the angle of inclination of the cutting blade may be varied so that the angle of inclination of the cut free ends to the axis of said cord material (23) is greater for larger diameter cord material (23) and less for smaller diameter cord material (23); and

the heating mould (14) comprises two blocks (64 and 70) arranged to meet at an interface (68) and having at least one cord receiving aperture extending across the interface (68) and including a channel (66) which is formed in one of the blocks (64) and forms a portion of the said aperture, the channel (66) having a cross-section in the shape of a major portion of the cross-section of the aperture.

2. Apparatus according to Claim 1, characterised in that said cord cutting fixture (12) comprises:—

a base (106);

a fixed jaw (50) attached to said base (106), said fixed jaw (50) including first guide means (54); and

a movable jaw (48) attached to said base (106) and displaceable with respect to said fixed jaw (50), said movable jaw (48) including second guide means (52) adapted to co-operate with said first guide means (54) in said fixed jaw (50) to provide said guide means.

3. Apparatus, according to Claim 2, characterised in that:—

the movable jaw (48) is connected to a first locking pin (96);

housing means (102) are connected to said base (106) and provided with a first locking pin aperture (100) therethrough adapted to receive said first locking pin (96); and

first locking means (56) are provided for locking said movable jaw (48) relative to said fixed jaw (50).

4. Apparatus, according to Claim 3, characterised in that :—

the housing means (102) include a first screw-threaded aperture (104) which intersects with said first locking pin aperture (100); and

said first locking means comprise a first locking screw (56) receivable in said first screw-threaded aperture (104) and adapted to impinge upon said first locking pin (96).

5. Apparatus, according to any preceding claim, characterised in that the heating mould (14) comprises:—

a first block (70) of heat conductive material;

a second block (64) of heat conductive material arranged to meet at an interface (68) with said first block (70); and

heater elements (88) for heating said first and second blocks (70 and 64);

and further characterised in that at least one cord material receiving aperture (74) extends across the interface (68) and includes a channel (66), formed in one of the blocks (64), having a cross-section in the shape of a major segment of a circle, the arcuate perimeter portion of which subtends a first angle of more than 180° at the centre of the circle.

6. Apparatus according to Claim 5, characterised in that:—

the cord material receiving aperture (74) includes a channel (72), formed in the first block (70) for registration with the channel (66) formed in the second block (64), having a cross-section in the shape of a minor segment of a circle, the arcuate perimeter portion of which subtends a second angle, which is less than 360° minus the first angle, at the centre of the circle.

7. Apparatus, according to Claim 5 or Claim 6, characterised in that:—

the first block (70) is provided with at least one second locking pin (78);

the second block (64) is formed with a second locking pin aperture (80) for receiving the or each said second locking pin (78); and

second locking means (82) are provided for locking said first block (70) in position relative to said second block (64).

8. Apparatus, according to Claim 7, characterised in that:—

each second locking pin aperture (80) is intersected by a separate second screw-threaded aperture (84) formed in the second block (64); and

the second locking means comprise a second threaded screw (82) receivable in the or each second screw-threaded aperture (84) and adapted to impinge upon the or each second locking pin (78).

9. A method, for making O-rings (194) from stock O-ring cord material (23), comprising the steps of:—

holding a loop of the cord material (23) and cutting the cord material (23) into a predetermined length having two free ends (60 and 62);

applying a bonding material (58) to at least one of said free ends (60 and 62); and

mating the free ends (60 and 62) in a heating mould (14) and heating the free ends (60 and 62) so as to cause the free ends (60 and 62) to bond to each other;

characterised in that:—

the loop of cord material (23) is held in a cord cutting fixture (12) which includes guide means (52 and 54) for a blade and the free ends (60 and 62) are cut matchingly so as to mate with each other; and

the free ends (60 and 62) are mated by inserting one of the free ends into a heating mould (14) which comprises two blocks (64 and 70) arranged to meet at an interface (68) and having at least one cord receiving aperture extending across the interface (68) and including a channel (66) formed in one of the blocks (64), having a cross-section in the shape of a major portion of the cross-section of the cord.

10. A method, according to Claim 9, characterised in that the free ends (60 and 62) are bonded together by heating to a temperature of 200°C.

## Revendications

1. Dispositif, sous forme d'une trousse, pour la fabrication d'anneaux toriques (194) à partir de matériau de cordon (23) pour anneaux toriques, comportant:

un organe fixe de découpage de cordon (12) pour maintenir une boucle dudit matériau de cordon alors qu'il est découpé à une longueur prédéterminée avec deux bouts libres (60 et 62);

un liquide de liaison (58) à appliquer à au moins l'un desdits deux bouts libres (60 et 62), et

un moule de chauffage (14) pour maintenir lesdits deux bouts libres (60 et 62) en contact d'association et chauffer les bouts libres (60 et 62) afin d'amener ces derniers à se lier mutuellement;

caractérisé en ce que:

l'organe fixe de découpage de cordon (12) comprend des moyens de retenue ajustables en continu (48, 50 et 106) pour serrer et bloquer lesdits deux bouts libres (60 et 62) en association côte à côte, et des moyens de guidage (52 et 54) pour guider une lame de coupe (26) de telle sorte que les bouts libres (60 et 62) soient découpés en oblique avec une inclinaison parfaitement complémentaire et s'associent mutuellement, et de telle sorte que l'angle d'inclinaison de la lame de coupe puisse être modifié de telle manière que l'angle d'inclinaison des bouts libres coupés par rapport à l'axe du matériau de cordon (23) soit supérieur pour un matériau de cordon (23) de grand diamètre et inférieur pour un matériau de cordon (23) de petit diamètre, et

le moule de chauffage (14) comprend deux blocs (64 et 70) agencés de façon à se rencontrer en une interface (68) et offrant au moins une ouverture de réception de cordon s'étendant à travers l'interface (68) et comportant un canal (66) qui est façonné dans un des blocs (64) et forme une partie de ladite ouverture, le canal (66) possédant une section transversale sous la forme d'une majeure partie de la section transversale de l'ouverture.

2. Dispositif suivant la revendication 1, caractérisé en ce que ledit organe fixe de découpage de cordon (12) comprend:

une base (106);

une mâchoire fixe (50) fixée à ladite base (106), ladite mâchoire fixe (50) comportant des premiers moyens de guidage (54), et

une mâchoire mobile (48) fixée à ladite base (106) et mobile par rapport à ladite mâchoire fixe (50), ladite mâchoire mobile (48) comportant des seconds moyens de guidage (52) destinés à coopérer avec lesdits premiers moyens de guidage (54) dans ladite mâchoire fixe (50) pour constituer lesdits moyens de guidage.

3. Dispositif suivant la revendication 2, caractérisé en ce que:

la mâchoire mobile (48) est reliée à une première goupille de blocage (96);

des moyens de boîtier (102) sont reliés à ladite base (106) et dotés d'une première ouverture de goupille de blocage (100) des traversant pour recevoir ladite première goupille de blocage (96), et

des premiers moyens de blocage (56) sont prévus pour bloquer ladite mâchoire mobile (48) par rapport à ladite mâchoire fixe (50).

4. Dispositif suivant la revendication 3, caractérisé en ce que:

les moyens de boîtier (102) comprennent une première ouverture taraudée (104) qui recoupe ladite première ouverture de goupille de blocage (100), et

lesdits premiers moyens de blocage comprennent une première vis de blocage (56) pouvant être reçue dans ladite première ouverture taraudée (104) et destinée à venir rencontrer laditre première goupille de blocage (96).

5. Dispositif suivant l'une quelconque des revendications précédentes, caractérisé en ce que le moule chauffant (14) comprend:

un premier bloc (70) de matière conductrice de la chaleur;

un second bloc (64) de matière conductrice de la chaleur agencé pour rencontrer en une interface (68) ledit premier bloc (70), et

des éléments chauffants (88) pour chauffer lesdits premier et second blocs (70 et 64);

et caractérisé en outre en ce qu'au moins une ouverture de réception de matériau de cordon (74) s'étend à travers l'interface (68) et comporte un canal (66) pratiqué dans l'un des blocs (64) avec une section transversale en forme d'un segment majeur d'un cercle, dont la partie de périmètre en arc sous-tend un premier angle de plus de 180° au centre du cercle.

6. Dispositif suivant la revendication 5, caractérisé en ce que:

l'ouverture de réception de matériau de cordon (74) comporte un canal (72) pratiqué dans le premier bloc (70) pour s'aligner avec le canal (66) pratiqué dans le second bloc (64) avec une section transversale en forme d'un segment mineur d'un cercle, dont la partie de périmètre en arc sous-tend un second angle qui est inférieur à 360° moins le premier angle, au centre du cercle.

7. Dispositif suivant la revendication 5 ou la revendication 6, caractérisé en ce que:

le premier bloc (70) est doté d'au moins une seconde goupille de blocage (78);

le second bloc (64) est façonné avec une seconde ouverture de goupille de blocage (80) afin de recevoir la ou chaque seconde goupille de blocage (78), et

des seconds moyens de blocage (82) sont prévus pour bloquer ledit premier bloc (70) en position par rapport audit second bloc (64).

8. Dispositif suivant la revendication 7, caractérisé en ce que:

chaque seconde ouverture de goupille de blocage (80) est recoupée par une seconde ouverture taraudée distincte (84) pratiquée dans le second bloc (64), et

les seconds moyens de blocage comprennent une seconde vis (82) pouvant être reçue dans la ou chaque seconde ouverture taraudée (84) et destinée à venir rencontrer la ou chaque seconde goupille de blocage (78).

9. Procédé pour fabriquer des anneaux toriques (194) à partir d'un matériau de cordon pour anneaux toriques (23), consistant à:

maintenir une boucle du matériau de cordon (23) et découper le matériau de cordon (23) à une longuer prédéterminée avec deux bouts libres (60 et 62);

appliquer une matière de liaison (58) à au moins l'un desdits bouts libres (60 et 62), et

associer les bouts libres (60 et 62) dans un moule de chauffage (14) et chauffer les bouts libres (60 et 62) de façon à amener les bouts libres (60 et 62) à se lier mutuellement, caractérisé en ce que:

la boucle de matériau de cordon (23) est maintenue dans un organe fixe de découpage de cordon (12) qui comporte des moyens de guidage (52 et 54) pour une lame, et les bouts libres (60 et 62) sont découpés en correspondance de manière à s'adapter l'un à l'autre, et les bouts libres (60 et 62) sont associés en introduisant l'un des bouts libres dans un moule de chauffage (14) qui comporte deux blocs (64 et 70) agencés de manière à se rencontrer en une interface (68) et présentant au moins une ouverture de réception de cordon s'étendant à travers l'interface (68) et offrant un canal (66) pratiqué dans l'un des blocs (64), avec une section transversale en forme d'une majeure partie de la section transversale du cordon.

10. Procédé suivant la revendication 9, caractérisé en ce que les bouts libres (60 et 62) sont liés ensemble par chauffage à une température de 200°C.

**Patentansprüche**

1. Apparat in Form eines Gerätesatzes zum Herstellen von O-Ringen 194 von einer Rolle von O-Ring-Schnurmaterial 23, umfassend:

— ein Schur-Schneidgerät 12 zum Halten einer Schlinge des besagten Schnurmaterials während dieses auf eine vorbestimmte Länge mit zwei freien Enden 60, 62 geschnitten wird;
— eine Klebeflüssigkeit 58 zum Aufbringen auf wenigstens eines der genannten zwei freien Enden 60, 62, und
— eine Heizform 14 um die beiden genannten freien Enden 60, 62 paßgenau zusammenzuhalten und die freien Enden zu erhitzen, um diese freien Enden 60, 62 zu verbinden, dadurch gekennzeichnet, daß das Schnurschneidgerät 12 stufenlos einstellbare Haltemittel 48, 50, 106 beinhaltet, um die beiden freien Enden nebeneinander liegend zu klemmen und festzuhalten. Dazu gehören auch Führungsmittel 52 zum Führen einer Schneidklinge 26, so daß die freien Enden 60, 62 schräg geschnitten werden mit sich genau ergänzender Neigung und exakt zusammenpassen. Ferner kann der Neigungswinkel der Schneidklinge geändert werden, so daß der Neigungswinkel der geschnittenen freien Enden bezüglich der Längsachse des Schnurmaterials 23 bei größerem Schnurumfang größer und bei geringerem Schnurumfang 23 kleiner ist; und
— daß die Heizform 14 zwei Blöcke 64, 70 umfaßt, die so angeordnet sind, daß sie an einer Stirnfläche sich berühren und die zumindest eine Schnuraufnahmeöffnung haben, die sich über die Stirnfläche 68 erstreckt, einschließlich einer Hohlkehle 66, die in einem der Blöcke 64 geformt ist und einen Teil der genannten Öffnung bildet. Die Hohlkehle 66 hat einen Querschnitt in der Form eines Hauptteils des Querschnitts der Öffnung.

2. Apparat nach Anspruch 1, dadurch gekennzeichnet, daß besagtes Schneidgerät 12 eine Bodenplatte 106, eine ortsfeste Backe 50, angebracht auf Grundplatte 106, einschließlich ersten Führungsmitteln 54 und eine bewegliche Backe 48, angebracht auf der Grundplatte 106 umfaßt. Die bewegliche Backe 48 ist verscheibbar in Hinsicht auf die ortsfeste Backe 50, wobei die bewegliche Backe 48 eine zweites Führungsmittel 52 beinhaltet, das mit dem ersten Führungsmittel in besagter ortesfester Backe 50 zusammenwirkt, um die besagte Klingenführung zu bilden.

3. Apparat nach Anspruch 2, dadurch gekennzeichnet, daß die bewegliche Backe 48 mit einem ersten Sperrstift 96 verbunden ist. Ein Gehäuse 102 ist mit der Grundplatte 106 verbunden und mit einer Sperrstiftöffnung 100 versehen und damit dafür vorbereitet, den Sperrstift 96 aufzunehmen und das erste Sperrmittel 56 die besagte bewegliche Backe 48 gegenüber der ortsfesten Backe 50 festsetzt.

4. Apparat nach Anspruch 3, dadurch gekennzeichnet, daß das Gehäuse 102 eine Gewindebohrung 104 beinhaltet, die sich mit der ersten Sperrstiftöffnung kreuzt und das erste Sperrmittel eine erste Sperrschraube 56 in der ersten Gewindebohrung 104 besitzt, die auf den ersten Sperrstift 96 drückt.

5. Apparat, nach jedem der vorherigen Ansprüche, dadurch gekennzeichnet, daß die Heizform 14 einen ersten Block 70 aus wärmeleitendem Material umfaßt, einen zweiten Block 64 aus wärmeleitendem Material, letzterer ist so angebracht, daß er am ersten Block mit der Stirnfläche 68 anliegt und Heizelemente 88 zum Beheizen des ersten und zweiten Blocks 70, 64, weiter charakterisiert, daß wenigstens eine Schnurmaterialaufnahmeöffnung 74 sich über die Stirnfläche 68 erstreckt und eine Hohlkehle 66 enthält, die in einem der Blöcke 64 geformt ist, mit einem Querschnitt in Form eines großen Hauptsegmentes eines Kreises; der bogenförmige Umfangsteil überstreicht einen Winkel von mehr als 180°, gemessen von der Mitte des Kreises.

6. Apparat nach Anspruch 5, dadurch gekennzeichnet, daß die Schnurmaterialaufnahmeöffnung 74 eine Hohlkehle 72 beinhaltet, geformt im ersten Block 70 zur Ergänzung der Auskehlung 66 geformt im zweiten Block 64 mit einem Querschnitt in Form eines kleineren Segmentes eines Kreises, wobei der bogenförmige Umfangsteil, einem Winkel überstreicht, der kleiner als 360° minus des vorher erwähnten Kreissegmentwinkels ist.

7. Apparat, nach Anspruch 5 oder 6, dadurch gekennzeichnet, daß der erste Block 70 mit mindestens einem zweiten Sperrstift 78 ausgestattet ist, der zweite Block 64 eine zweite Sperrstiftöffnung 80 aufweist um den oder jeden besagten zweiten Sperrstift 78 aufzunehmen und zweite Sperrmittel 82 zum Festmachen des besagten ersten Blockes 70 in Stellung zum zweiten Block 64 vorgesehen sind.

8. Apparat nach Anspruch 7, dadurch gekennzeichnet, daß jede zweite Sperrstiftöffnung 80 sich mit einer getrennten zweiten Gewindebohrung 84 kreuzt, die in dem zweiten Block geformt ist und die zweiten Sperrmittel eine zweite Gewindeschraube 82 in der oder jeder zweiten schraubengängigen Öffnung 84 beinhalten, die gegen den oder jeden zweiten Sperrstift 78 drückt.

9. Methode zur Herstellung von O-Ringen 194 von einer Spule von O-Ring-Schnurmaterial 23, enthaltend folgende Stufen: Das Schnurmaterial 23 wird zu einer Schlinge gelegt und in eine vorbestimmte Länge mit zwei freien Enden 60, 62 geschnitten, ein Klebemittel 58 wird mindestens auf eines der freien Enden 60, 62 aufgebracht, paßgenaues Zusammenhalten der freien Enden 60, 62 in einer Heizform 14 und Beheizen der freien Enden 60, 62, so daß diese sich verbinden, dadurch gekennzeichnet, daß die Schlinge des Schnurmaterials 23 in einem Schneidgerät 12 festgehalten wird, das Führungsmittel 52, 54 für eine Klinge besitzt und daß die freien Enden 60, 62 aufeinander abgestimmt geschnitten werden, so daß sie exakt zusammenpassen; daß die freien Enden 60, 62 durch Einführung eines freien Endes in die Heizform 14 das zwei Blöcke 64, 70 enthält, paßgenau geführt werden, wobei die Blöcke so angebracht sind, daß sie mit einer Stirnfläche 68 aufeinanderliegen und wenigstens eine Schnuraufnahmeöffnung, die sich über diese Stirnfläche erstreckt haben und einer Hohlkehle 66 beinhalten, die in einem der Blöcke 64 mit einem Querschnitt in Form eines Hauptteils des Querschnitts der Schnur gerformt ist.

10. Methode, nach Anspruch 9, dadurch gekennzeichnet, daß die freien Enden 60, 62 bei einer Temperatur von 200°C zusammengeschweißt werden.

Fig. 1

Fig. 2A.  Fig. 2B.  Fig. 2C.

Fig. 2D.  Fig. 2E.

Fig. 2F.  Fig. 2G.

Fig. 2H.

0 000 618

Fig. 3A.

Fig. 3B.

Fig. 3C.

Fig. 3D.

Fig. 3E.

Fig. 4A.

Fig. 4B.

Fig. 4C.

Fig. 4D.

Fig. 4E.

Fig. 4F.